# EUROPEAN PATENT SPECIFICATION

(11) **EP 4 409 428 B1**
(45) Date of publication and mention of the grant of the patent: **18.11.2026**
(21) Application number: 22797072.0
(22) Date of filing: 28.09.2022
(51) Int. Cl.: G06F 16/22

(54) **HANDLING LOCK CONTENTION OF LEAF PAGE OF SQL INDEX**
HANDHABUNG VON SPERRKONFLIKTEN DER BLATTSEITE EINES SQL-INDEX
GESTION DE CONFLITS DE VERROUILLAGE DE PAGE DE FEUILLE D'INDEX SQL

(30) Priority: 01.10.2021 US 202117492132
(43) Date of publication of application: 07.08.2024
(73) Proprietor: International Business Machines Corporation, Armonk, NY 10504 (US)
(72) Inventor: WANG, Xiaobo, SAN JOSE, California 95120-6099 (US); WANG, Ping, SAN JOSE, California 95141-1003 (US); LI, Shuo, SAN JOSE, California 95120-6099 (US); SUN, Sheng Yan, Beijing 11 100193 (CN)
(74) Representative: IBM United Kingdom Limited
(86) International application number: PCT/EP2022/077029
(87) International publication number: WO 2023/052457

(56) References cited:
- US-A1- 2019 179 613
- GOETZ GRAEFE: "A survey of B-tree locking techniques", ACM TRANSACTIONS ON DATABASE SYSTEMS, ACM, NEW YORK, NY, US, vol. 35, no. 3, 30 July 2010 (2010-07-30), pages 1 - 26, XP058365639, ISSN: 0362-5915, DOI: 10.1145/1806907.1806908
- MOHAN C ET AL: "Algorithms for creating indexes for very large tables without quiescing updates", PROCEEDINGS OF THE ACM SIGMOD INTERNATIONAL CONFERENCE ON MANAGEMENT OF DATA. SAN DIEGO, JUNE 2 - 5, 1992; [PROCEEDINGS OF THE ACM SIGMOD INTERNATIONAL CONFERENCE ON MANAGEMENT OF DATA], NEW YORK, ACM, US, 1 June 1992 (1992-06-01), pages 361 - 370, XP058323301, ISBN: 978-0-89791-521-2, DOI: 10.1145/130283.130337

## Description

### TECHNICAL FIELD

The present disclosure relates generally to relational database management systems, and more particularly to handling a lock contention of a leaf page of an index (e.g., structured query language (SQL) index).

### BACKGROUND

A relational database is a digital database based on the relational model of data. A system used to maintain relational databases is a relational database management system (RDBMS). Many relational database systems have an option of using the structured query language (SQL) for querying and maintaining the database. United States Patent Application publication number US 2019/179613 A1, Stamos, J. W. et al ("Avoiding host spots during ingest where ingest ordering must be preserved", 13 June 2019) discloses techniques for achieving physically dispersed item-dispersal patterns in queue tables that are used as circular buffers in a FIFO system. The techniques achieve the physically dispersed item-dispersal patterns while retaining FIFO semantics, efficient data ingest, efficient data access, and low latency for both fixed and variable-size ingest data. Because consecutively inserted rows are written to physically dispersed locations on persistent storage, lock contention between concurrent ingest sessions is significantly reduced. Once a physically dispersed item-dispersal pattern is established for a first set of inserted rows, subsequent rows are added by overwriting the existing rows. The physical dispersal of the initial rows may be accomplished by setting values in a slot number column such that updates that are made in a sequence that is based on the slot number column exhibit a desired physical dispersal pattern. Boetz, Graefe, "A survey of B-tree locking techniques", 30 July 2010, ACM Transactions on Database Systems, ACM NY, vol. 35, no. 3, ISSN: 0362-5915, discloses a survey to clarify, simply, and structure the topic of concurrency. Mohan, C. et al ("Algorithms for creating indexes for very large tables without quiescing updates", 1 June 1992, Proceedings of the ACM SIGMOD International Conference on Management of Data, San Diego, ISBN: 978-0-89791-521-2) discloses two algorithms to allow updates to be performed on a table while an index is being built for that table.

### SUMMARY

In one embodiment of the present disclosure, a computer-implemented method for handling lock contentions of an index comprises monitoring for a lock contention of a leaf page of the index during an insert operation of index keys. The method further comprises routing a first index key to a queue of a buffer in response to detecting the lock contention of the leaf page of the index, where the first index key corresponds to an index key of a transaction to be inserted in the leaf page of the index. The method additionally comprises storing a mapping of the first index key stored in the queue of the buffer to the leaf page experiencing the lock contention in a data structure, where the data structure stores a mapping of index keys stored in queues of the buffer to leaf pages of the index.

Other forms of the embodiment of the computer-implemented method described above are in a system and in a computer program product.

According to one aspect, there is provided a computer program product for handling lock contentions of an index, the computer program product comprising one or more computer readable storage mediums having program code embodied therewith, the program code comprising programming instructions for: monitoring for a lock contention of a leaf page of said index during an insert operation of index keys; routing a first index key to a queue of a buffer in response to detecting said lock contention of said leaf page of said index, wherein said first index key corresponds to an index key of a transaction to be inserted in said leaf page of said index; and storing a mapping of said first index key stored in said queue of said buffer to said leaf page experiencing said lock contention in a data structure, wherein said data structure stores a mapping of index keys stored in queues of said buffer to leaf pages of said index.

According to another aspect, there is provided a system, comprising: a memory for storing a computer program for handling lock contentions of an index; and a processor connected to said memory, wherein said processor is configured to execute program instructions of the computer program comprising: monitoring for a lock contention of a leaf page of said index during an insert operation of index keys; routing a first index key to a queue of a buffer in response to detecting said lock contention of said leaf page of said index, wherein said first index key corresponds to an index key of a transaction to be inserted in said leaf page of said index; and storing a mapping of said first index key stored in said queue of said buffer to said leaf page experiencing said lock contention in a data structure, wherein said data structure stores a mapping of index keys stored in queues of said buffer to leaf pages of said index.

The foregoing has outlined rather generally the features and technical advantages of one or more embodiments of the present disclosure in order that the detailed description of the present disclosure that follows may be better understood. Additional features and advantages of the present disclosure will be described hereinafter which may form the subject of the claims of the present disclosure.

### BRIEF DESCRIPTION OF THE DRAWINGS

One or more preferred embodiments of the present invention will now be described, by way of example only, and with reference to the following drawings:
Figure 1 illustrates a communication system for practicing the principles of the present disclosure in accordance with an embodiment of the present disclosure;
Figure 2 is a diagram of the software components of the relational database management system to effectively handle a lock contention of a leaf page of an index in accordance with an embodiment of the present disclosure;
Figure 3 illustrates an embodiment of the present disclosure of the hardware configuration of the relational database management system which is representative of a hardware environment for practicing the present disclosure;
Figure 4 is a flowchart of a method for handling lock contentions of a leaf page of an index in accordance with an embodiment of the present disclosure;
Figure 5 illustrates monitoring for a lock contention of a leaf page of the index during an insert operation of the index keys in the leaf page in accordance with an embodiment of the present disclosure;
Figure 6 illustrates routing an index key from a transaction, which involves the attempt to store the index key in a leaf page experiencing lock contention, to a queue of the index distribution queue buffer in accordance with an embodiment of the present disclosure;
Figure 7 is a flowchart of a method for handling the storage of additional index keys in accordance with an embodiment of the present disclosure;
Figure 8 is a flowchart of a method for asynchronously inserting index keys in the appropriate leaf page previously experiencing lock contention in accordance with an embodiment of the present disclosure;
Figure 9 is a flowchart of a method for synchronously inserting index keys in a leaf page in response to detecting an index split of the leaf page, a system check point involving the leaf page or the receipt of a select, update or delete statement involving the leaf page in accordance with an embodiment of the present disclosure;
Figure 10 is a flowchart of a method for pre-allocating leaf pages during an index split if a potential future lock contention is detected in accordance with an embodiment of the present disclosure; and
Figure 11 illustrates pre-allocating leaf pages during an index split in accordance with an embodiment of the present disclosure.

### DETAILED DESCRIPTION

As stated in the Background section, a relational database is a digital database based on the relational model of data. A system used to maintain relational databases is a relational database management system (RDBMS). Many relational database systems have an option of using the structured query language (SQL) for querying and maintaining the database.

SQL queries, such as the SQL INSERT INTO statement, may be received and processed by the relational database management system (e.g., SQL server). Such queries (e.g., SQL INSERT INTO statement) may be used to add new rows of data to a table in the database. When such a scenario occurs, a related index defined on this table needs to be updated.

An index is an on-disk structure associated with a table or view that speeds the retrieval of rows from the table or view. An index typically contains keys built from one or more columns in the table or view. These keys are stored in a structure (B-tree) that enables the relational database management system to find the row or rows associated with the key values quickly and efficiently. As a result, when a new row of data is added to a table in the database, the index needs to be updated to include the key value associated with such a row of data. The storing of such a key value in the index is referred to herein as a "transaction."

A B-tree index creates a multi-level tree structure that breaks a database down into fixed-size blocks or pages. Each level of this tree can be used to link those pages via an address location, allowing one page (known as a node, or internal page) to refer to another with leaf pages at the lowest level. One page is typically the starting point of the tree or the "root." This is where the search for a particular key would begin, traversing a path that terminates in a leaf. That is, the leaf page of an index is the lowest level of the index where all of the keys for the index appear in sorted order. Most pages in such a structure are leaf pages which ultimately refer to specific table rows.

At times, multiple different transactions are attempting to insert a key value in a leaf page of the index (e.g., SQL index) simultaneously thereby resulting in a "lock contention" which negatively impacts performance. A "lock contention" occurs whenever one process (transaction) attempts to acquire a "lock" held by another process (transaction).

In an attempt to address lock contention, such transactions may be handled in a randomized manner. However, the processing of queries, such as SQL queries, related to such transactions would suffer in performance.

Furthermore, in another attempt to address lock contention, the minimum page size of the leaf page of the index may be increased. However, lock contention would only be slightly reduced. Furthermore, as a result of increasing the minimum page size of the leaf page of the index, there will be more required database input/output operations during the index access.

As a result, there is not currently a means for effectively handling a lock contention of a leaf page of the index (e.g., SQL index).

The embodiments of the present disclosure provide a means for effectively handling lock contentions of leaf pages of an index, such as a SQL index, by utilizing a buffer (referred to herein as the "index distribution queue buffer") for storing index keys in queues of the buffer as opposed to storing such index keys in the leaf pages experiencing lock contention. Upon such a leaf page no longer experiencing such lock contention, the appropriate index keys are then removed from the index distribution queue buffer and stored in the leaf page based on a data structure (referred to herein as the "index leaf router map") that maps the index keys stored in the index distribution queue buffer to the appropriate leaf pages of the index. A more detailed description of these and other features will be provided below.

In some embodiments of the present disclosure, the present disclosure comprises a computer-implemented method, system and computer program product for handling lock contentions of an index (e.g., SQL index). In one embodiment of the present disclosure, leaf pages of an index (e.g., SQL index) are monitored for a lock contention during an insert operation of index keys by the transactions. A "lock contention," as used herein, refers to whenever one process (transaction) attempts to acquire a "lock" on a leaf page of the index held by another process (transaction). An "index," as used herein, refers to an on-disk structure associated with a table or view that speeds the retrieval of rows from the table or view. In one embodiment, such an index stores "keys" or "index keys" built from one or more columns in the table or view. An "index key," as used herein, refers to the keys of the index (e.g., SQL index), which enable a relational database management system to find the row or rows associated with the key values quickly and efficiently. The storing of such a key value in the index is referred to herein as a "transaction." Furthermore, the "leaf page" of an index is the lowest level of the index where all of the keys for the index appear in sorted order. Upon detecting a lock contention of a leaf page, the next index key to be inputted into such a leaf page is routed to a queue of a buffer (referred to herein as the "index distribution queue buffer"). The index key that was stored in the queue of the index distribution queue buffer is then mapped to the particular leaf page experiencing the lock contention that the transaction originally attempted to store such an index key. In one embodiment, such mapping is stored in a data structure referred to herein as the "index leaf router map" which stores a mapping of index keys stored in the queues of the index distribution queue buffer to the leaf pages of the index. Upon such a leaf page no longer experiencing such lock contention, the appropriate index keys are then removed from the index distribution queue buffer and stored in the appropriate leaf page based on the mapping of the index leaf router map. In this manner, a lock contention of a leaf page of an index, such as a SQL index, is effectively handled.

In the following description, numerous specific details are set forth to provide a thorough understanding of the present disclosure. However, it will be apparent to those skilled in the art that the present disclosure may be practiced without such specific details. In other instances, well-known circuits have been shown in block diagram form in order not to obscure the present disclosure in unnecessary detail. For the most part, details considering timing considerations and the like have been omitted inasmuch as such details are not necessary to obtain a complete understanding of the present disclosure and are within the skills of persons of ordinary skill in the relevant art.

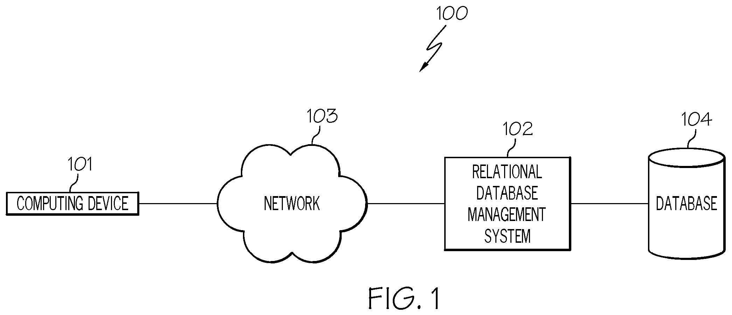

Referring now to the Figures in detail, Figure 1 illustrates an embodiment of the present disclosure of a communication system 100 for practicing the principles of the present disclosure. Communication system 100 includes a computing device 101 connected to a relational database management system 102 (e.g., structured query language (SQL) server) via a network 103. Furthermore, as illustrated in Figure 1, relational database management system 102 is connected to a database 104.

Computing device 101 may be any type of computing device (e.g., portable computing unit, Personal Digital Assistant (PDA), laptop computer, mobile device, tablet personal computer, smartphone, mobile phone, navigation device, gaming unit, desktop computer system, workstation, Internet appliance and the like) configured with the capability of connecting to network 103 and consequently communicating with other computing devices 101 and relational database management system 102. It is noted that both computing device 101 and the user of computing device 101 may be identified with element number 101.

Network 103 may be, for example, a local area network, a wide area network, a wireless wide area network, a circuit-switched telephone network, a Global System for Mobile Communications (GSM) network, a Wireless Application Protocol (WAP) network, a WiFi network, an IEEE 802.11 standards network, various combinations thereof, etc. Other networks, whose descriptions are omitted here for brevity, may also be used in conjunction with system 100 of Figure 1 without departing from the scope of the present disclosure.

In one embodiment, the user of computing device 101 issues a query (e.g., SQL query) to relational database management system 102 (e.g., SQL server) to update, delete and request information from database 104. For example, the user may issue the query of INSERT INTO to add a new row of data to a table in database 104. Such a query will be processed by relational database management system 102, such as storing and retrieving data as requested by the user.

In one embodiment, relational database management system 102 is configured to maintain database 104, such as a relational database. In one embodiment, relational database management system 102 corresponds to a SQL server configured to use the structured query language (SQL) for querying and maintaining database 104.

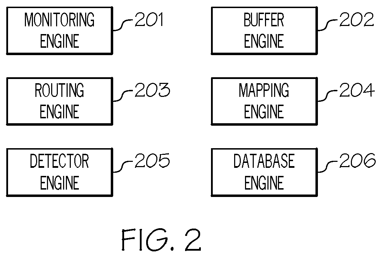

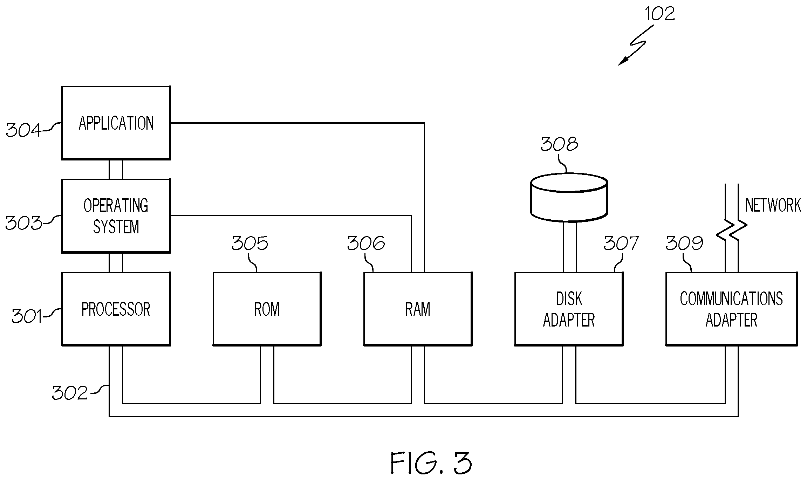

In one embodiment, relational database management system 102 is configured to effectively handle lock contentions of a leaf page of an index, such as a SQL index, by utilizing a buffer (referred to herein as the "index distribution queue buffer") for storing index keys in queues of the buffer as opposed to storing such index keys in the leaf page experiencing lock contention. Upon such a leaf page no longer experiencing such a lock contention, the appropriate index keys are then removed from the index distribution queue buffer and stored in the appropriate leaf page based on a data structure (referred to herein as the "index leaf router map") that maps the index keys stored in the index distribution queue buffer to the appropriate leaf pages of the index. A more detailed description of these and other features will be provided below. Furthermore, a description of the software components of relational database management system 102 is provided below in connection with Figure 2 and a description of the hardware configuration of relational database management system 102 is provided further below in connection with Figure 3.

System 100 is not to be limited in scope to any one particular network architecture. System 100 may include any number of computing devices 101, relational database management systems 102, networks 103 and databases 104.

A discussion regarding the software components used by relational database management system 102 to effectively handle a lock contention of a leaf page of an index, such as a SQL index, is provided below in connection with Figure 2.

Figure 2 is a diagram of the software components of relational database management system 102 to effectively handle a lock contention of a leaf page of an index, such as a SQL index, in accordance with an embodiment of the present disclosure.

Referring to Figure 2, in conjunction with Figure 1, relational database management system 102 includes a monitoring engine 201 configured to monitor for a lock condition of a leaf page of the index (e.g., SQL index) during an insert operation of index keys. As previously discussed, an insert operation of an index key in the leaf page of the index occurs when a query (e.g., SQL query) requests to add data in database 104, such as a new row of data to a table in database 104. An "index," as used herein, refers to an on-disk structure associated with a table or view that speeds the retrieval of rows from the table or view. In one embodiment, such an index stores "keys" or "index keys" built from one or more columns in the table or view. An "index key," as used herein, refers to the keys of the index (e.g., SQL index), which enable relational database management system 102 to find the row or rows associated with the key values quickly and efficiently. Such an index key corresponds to a value (e.g., 123242), variable characters (e.g., "Smith1"), etc.. The storing of such a key value in the index is referred to herein as a "transaction."

Furthermore, as previously discussed, in one embodiment, the index keys are stored in a B-tree structure, where such a B-tree index includes a multi-level tree structure that breaks a database down into fixed-size blocks or pages. Each level of this tree can be used to link those pages via an address location, allowing one page (known as a node, or internal page) to refer to another with leaf pages at the lowest level. One page is typically the starting point of the tree or the "root." This is where the search for a particular key would begin, traversing a path that terminates in a leaf. That is, the "leaf page" of an index is the lowest level of the index where all of the keys for the index appear in sorted order.

In one embodiment, monitoring engine 201 monitors for a lock contention of such a leaf page in the index during an insert operation of the index keys in the leaf page. A "lock contention," as used herein, refers to transactions attempting to insert a key value in a leaf page of the index simultaneously. That is, a "lock contention," occurs whenever one process (transaction) attempts to acquire a "lock" held by another process (transaction). In one embodiment, a "lock" on a leaf page to prevent other processes (transactions) from utilizing the leaf page may be accomplished by a "page level lock." A "page level lock," as used herein, refers to locking the entire leaf page. Alternatively, a process (transaction) may lock a row of a leaf page, such as via a "row lock plus page latch." A "row lock," as used herein, refers to locking a particular row of the leaf page and a "page latch," as used herein, refers to a mechanism managed by relational database management system 102 (e.g., SQL server) and not by users in which relational database management system 102 imposes a "latch" or "hold" to the leaf page to prevent access. A "row lock plus page latch," as used herein, refers to the combination of a "row lock" and a "page latch."

In one embodiment, monitoring engine 201 detects a lock contention based on the length of the page level lock waiting queue. A "page level lock waiting queue," as used herein, refers to a queue storing the various page level locks to be implemented (locks put in place for various leaf pages). For example, such a lock contention may be based on a threshold percentage of the entire length of the queue. In one embodiment, such a threshold percentage may be user-specified.

In one embodiment, monitoring engine 201 detects a lock contention based on the length of the row level lock waiting queue. A "row level lock waiting queue," as used herein, refers to a queue storing the various row level locks to be implemented (locks put in place for various rows in leaf pages). For example, such a lock contention may be based on a threshold percentage of the entire length of the queue. In one embodiment, such a threshold percentage may be user-specified.

In one embodiment, monitoring engine 201 detects a lock contention based on the length of the latch waiting queue. A "latch watching queue," as used herein, refers to a queue storing the various page latches to be implemented (latches put in place for various leaf pages). For example, such a lock contention may be based on a threshold percentage of the entire length of the queue. In one embodiment, such a threshold percentage may be user-specified.

Examples of software tools utilized by monitoring engine 201 to perform such monitoring include, but not limited to, SolarWinds^{®} Database Performance Analyzer, Paessler^{®} PRG Network Monitor, SQL Power Tools, Redgate^{®} SQL Monitor, Nagios^{®}, Opsview^{®}, etc.

Furthermore, monitoring engine 201 is configured to detect a level of lock contention at a leaf page of the index, such as determining if it is below a threshold level, which may be user-specified. In one embodiment, the degree or level of lock contention at a leaf page of the index is determined by monitoring engine 201 based on the number of transactions attempting to store an index key in the leaf page as well as based on the page free size information. The "page free size information," as used herein, indicates the amount of memory space available in the leaf page to store the index keys. In one embodiment, each leaf page of the index (e.g., SQL index) is allotted a particular size (e.g., 3 KB), such as by an expert. In one embodiment, monitoring engine 201 is configured to track the amount of memory being used by the storage of index keys, and hence, is able to determine the amount of memory space left over to store additional index keys. Examples of software tools utilized by monitoring engine 201 to track memory usage of the leaf pages of the index (e.g., SQL index) include, but not limited to, SQLShack, ApexSQL by Quest^{®}, etc.

In one embodiment, based on such memory usage of the leaf pages of the index and the number of index keys to be written to the leaf page, a degree or level of lock contention at the leaf page may be determined. For example, if the number of index keys to be written to the leaf page require a memory space that exceeds 50% of the remaining available memory space in the leaf page, then the leaf page may be said to be experiencing a lock contention. On the other hand, if the number of index keys to be written to the leaf page require a memory space that is less than 25% of the remaining available memory space in the leaf page, then the leaf page may be said to be experiencing a low level of a lock contention. A "low level" of a lock contention, as used herein, refers to a leaf page that is deemed to not be experiencing a lock contention.

Relational database management system 102 further includes a buffer engine 202 configured to create a buffer referred to herein as the "index distribution queue buffer." In one embodiment, the index distribution queue buffer is configured to include one or more queues, each storing one or more index keys that are mapped to a particular leaf page as discussed further below. In one embodiment, the index keys that are stored in the queue of the buffer are synchronized via compare-and-swap. "Compare-and-swap," as used herein, refers to an atomic instruction used in multithreading to achieve synchronization. It compares the contents of a memory location with a given value and, only if they are the same, modifies the contents of that memory location to a new given value.

In one embodiment, buffer engine 202 adds or deletes queues in the index distribution queue buffer based on the degree of lock contention of the leaf pages of the index (e.g., SQL index). For example, in one embodiment, buffer engine 202 creates a new queue in the index distribution queue buffer when a queue has reached a threshold percentage (e.g., 90%) of its maximum queue length during the situation in which the other queues of the index distribution queue buffer cannot handle the storage of additional index keys that are attempted to be stored in the leaf page(s) of the index experiencing lock contention.

In one embodiment, the number of index keys stored in a queue may be tracked via a "queue count" maintained by buffer engine 202. Once the queue count reaches zero, which indicates that the queue is no longer storing any index keys, such a queue may be recycled. That is, the data structure of the queue in the index distribution queue buffer is deleted and the memory previously utilized by the deleted data structure of the queue may now be free to be used later, such as for new queues that are later added to the index distribution queue buffer.

Examples of software tools utilized by buffer engine 202 to add or delete queues in the index distribution queue buffer include, but not limited to, ManageEngine^{®} OpManager, SolarWinds^{®} Network Performance Monitor, Redis, Amazon^{®} SQS, etc.

Furthermore, relational database management system 102 includes a routing engine 203 configured to route an index key to a queue of the index distribution queue buffer in response to monitoring engine 201 detecting a lock condition at a leaf page.

In one embodiment, routing engine 203 is configured to route index keys to a queue of the index distribution queue buffer in terms of specific rules, such as a modular hash. In one embodiment, routing engine 203 is configured to store index keys only in queues of the index distribution queue buffer that have at least a threshold percentage (e.g., 5%) of its capacity available to store index keys. In one embodiment, such a threshold is user-specified.

In one embodiment, routing engine 203 is configured to remove index keys from the index distribution queue buffer and insert them asynchronously in the appropriate leaf page based on a data structure (mapping of the index keys stored in the index distribution queue buffer to the appropriate leaf pages of the index) in response to the detection of a level of lock contention at the leaf page being below a threshold level. Such detection is performed by monitoring engine 201 as discussed above.

In one embodiment, routing engine 203 is configured to remove index keys from the index distribution queue buffer and insert them synchronously in the appropriate leaf page based on a data structure (mapping of the index keys stored in the index distribution queue buffer to the appropriate leaf pages of the index) in response to the detection of a split of the leaf page, a trigger of a system check point for the leaf page and receipt of a select, update or delete statement involving the leaf page. Such detection will be discussed further below in connection with detector engine 205.

A "split" of the leaf page, as used herein, refers to the situation when there is not enough memory space to add new data (e.g., a new row) required to be on a certain leaf page resulting in that leaf page having to split. When a split occurs, the leaf page may be split into two pages, with roughly half of the rows of that original leaf page on each of the leaf pages.

A "system check point" for the leaf page, as used herein, refers to a test operation that verifies data, such as index keys, retrieved from the leaf page by comparing that data with a baseline copy.

The select statement, such as the SQL SELECT statement, is used to select data from database 104. The update statement, such as the SQL UPDATE statement, is used to modify the existing records in a table of database 104. The delete statement, such as the SQL DELETE statement, is used to delete existing records in a table of database 104.

Examples of software tools utilized by routing engine 203 to route index keys from the index distribution queue buffer to the appropriate leaf page of the index (e.g., SQL index) include, but not limited to, ApexSQL by Quest^{®}, PostgreSQL^{®}, Snowflake^{®}, etc.

Additionally, relational database system 102 includes a mapping engine 204 configured to build a data structure (e.g., table) referred to herein as the "index leaf router map." In one embodiment, such a data structure is stored in the storage device of relational database management system 102 (e.g., memory, disk unit).

As discussed above, the "index leaf router map" maps the index keys stored in the index distribution queue buffer to the appropriate leaf pages of the index. In one embodiment, mapping engine 204 maps the index keys stored in various memory locations of the queues of the index distribution queue buffer to various leaf pages based on such memory locations. For example, a key index may be stored in memory location Q11 of Queue #1. Such a memory location may then be stored in the index leaf router map associated with a particular leaf page (e.g., leaf page #5). In one embodiment, the particular leaf page is based on the query received by relational database management system 102 in which the query resulted in a new row of data being added to the table of database 104 resulting in an index key that should be stored in such a leaf page. Instead of storing such an index key in this leaf page, it is temporarily stored in the index distribution queue buffer until the leaf page has adequate capacity to store the index key. In order to keep track of which leaf page should receive which index key, such information is maintained by mapping engine 204 in the index leaf router map.

In one embodiment, the mapping of the memory locations of the index keys in the queues of the index distribution queue buffer with the identifiers of the various leaf pages of the index (e.g., SQL index) are synchronized via compare-and-swap.

Examples of software tools utilized by mapping engine 204 to map the index keys stored in the index distribution queue buffer to the appropriate leaf pages of the index include, but not limited to, IBM^{®} Db2, ApexSQL by Quest^{®}, etc.

Furthermore, relational database management system 102 includes a detector engine 205 configured to detect a leaf page split, a trigger of a system check point for the leaf page and receipt of a select, update or delete statement involving a leaf page.

As discussed above, a "split' of the leaf page, as used herein, refers to the situation when there is not enough memory space to add new data (e.g., a new row) required to be on a certain leaf page resulting in that leaf page having to split. When a split occurs, the leaf page may be split into two pages, with roughly half of the rows of that original leaf page on each of the leaf pages. As a result, detector engine 205 detects a leaf page split upon the creation of a new leaf page to store half of the data stored in the original leaf page.

Furthermore, as discussed above, a "system check point" for the leaf page, as used herein, refers to a test operation that verifies data, such as index keys, retrieved from the leaf page by comparing that data with a baseline copy. In one embodiment, detector engine 205 detects such a system check point based on the detection of the issuance of a checkpoint by a database engine 206 (e.g., SQL server database engine) of relational database management system 102.

In one embodiment, database engine 206 is configured to periodically issue a checkpoint (e.g., automatic, indirect, manual and internal types of checkpoints) to verify data in the leaf pages. In one embodiment, the issuance of such a checkpoint is detected by detector engine 205 based on the checkpoint command issued by database engine 206.

Additionally, as discussed above, the select statement, such as the SQL SELECT statement, is used to select data from database 104. The update statement, such as the SQL UPDATE statement, is used to modify the existing records in a table of database 104. The delete statement, such as the SQL DELETE statement, is used to delete existing records in a table of database 104. In one embodiment, detector engine 205 is configured to detect the receipt of such statements based on identifying such statements in the query received by relational database management system 102 from computing device 101. In one embodiment, detector engine 205 utilizes natural language processing to identify such statements in the query, where such terms are stored in a data structure populated by an expert. In one embodiment, such a data structure is stored in a storage device (e.g., memory, disk unit) of relational database management system 102.

In one embodiment, detector engine 205 is configured to detect the sequential insert pattern of index keys in the leaf pages during an index split. As discussed above, when an index split occurs, the leaf page may be split into two pages, with roughly half of the rows of that original leaf page on each of the leaf pages. In one embodiment, if a sequential pattern (a continuous movement pattern) of index keys are inputted into such leaf pages, then detector engine 205 pre-allocates multiple leaf pages of the index asynchronously to reduce a possible lock contention scenario. A lock contention may be said to more likely occur in such a situation since the sequential pattern of index keys may continue in such leaf pages. In one embodiment, such a continuous movement pattern is detected by detector engine 205 by using high/low key values from the previous leaf pages to predict the key values as non-leaf key values against those new pre-allocated leaf pages.

A further description of these and other functions is provided below in connection with the discussion of the method for handling lock contentions of a leaf page of an index (SQL index).

Prior to the discussion of the method for handling lock contentions of a leaf page of an index (SQL index), a description of the hardware configuration of relational database management system 102 (Figure 1) is provided below in connection with Figure 3.

Referring now to Figure 3, Figure 3 illustrates an embodiment of the present disclosure of the hardware configuration of relational database management system 102 (Figure 1) which is representative of a hardware environment for practicing the present disclosure.

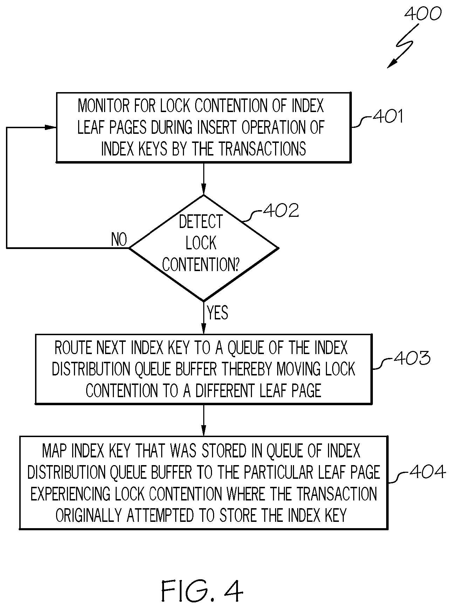

Relational database management system 102 has a processor 301 connected to various other components by system bus 302. An operating system 303 runs on processor 301 and provides control and coordinates the functions of the various components of Figure 3. An application 304 in accordance with the principles of the present disclosure runs in conjunction with operating system 303 and provides calls to operating system 303 where the calls implement the various functions or services to be performed by application 304. Application 304 may include, for example, monitoring engine 201 (Figure 2), buffer engine 202 (Figure 2), routing engine 203 (Figure 2), mapping engine 204 (Figure 2), detector engine 205 (Figure 2) and database engine 206 (Figure 2). Furthermore, application 304 may include, for example, a program for handling lock contentions of a leaf page of an index (SQL index) as discussed further below in connection with Figures 4-11.

Referring again to Figure 3, read-only memory ("ROM") 305 is connected to system bus 302 and includes a basic input/output system ("BIOS") that controls certain basic functions of relational database management system 102. Random access memory ("RAM") 306 and disk adapter 307 are also connected to system bus 302. It should be noted that software components including operating system 303 and application 304 may be loaded into RAM 306, which may be relational database management system's 102 main memory for execution. Disk adapter 307 may be an integrated drive electronics ("IDE") adapter that communicates with a disk unit 308, e.g., disk drive. It is noted that the program for handling lock contentions of a leaf page of an index (SQL index), as discussed further below in connection with Figures 4-11, may reside in disk unit 308 or in application 304.

Relational database management system 102 may further include a communications adapter 309 connected to bus 302. Communications adapter 309 interconnects bus 302 with an outside network (e.g., network 103 of Figure 1) to communicate with other devices, such as computing device 101 (Figure 1).

In one embodiment, application 304 of relational database management system 102 includes the software components of monitoring engine 201, buffer engine 202, routing engine 203, mapping engine 204, detector engine 205 and database engine 206. In one embodiment, such components may be implemented in hardware, where such hardware components would be connected to bus 302. The functions discussed above performed by such components are not generic computer functions. As a result, relational database management system 102 is a particular machine that is the result of implementing specific, non-generic computer functions.

In one embodiment, the functionality of such software components (e.g., monitoring engine 201, buffer engine 202, routing engine 203, mapping engine 204, detector engine 205 and database engine 206) of relational database management system 102, including the functionality for handling lock contentions of a leaf page of an index, may be embodied in an application specific integrated circuit.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be accomplished as one step, executed concurrently, substantially concurrently, in a partially or wholly temporally overlapping manner, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

As stated above, SQL queries, such as the SQL INSERT INTO statement, may be received and processed by the relational database management system (e.g., SQL server). Such queries (e.g., SQL INSERT INTO statement) may be used to add new rows of data to a table in the database. When such a scenario occurs, a related index defined on this table needs to be updated. An index is an on-disk structure associated with a table or view that speeds the retrieval of rows from the table or view. An index typically contains keys built from one or more columns in the table or view. These keys are stored in a structure (B-tree) that enables the relational database management system to find the row or rows associated with the key values quickly and efficiently. As a result, when a new row of data is added to a table in the database, the index needs to be updated to include the key value associated with such a row of data. The storing of such a key value in the index is referred to herein as a "transaction." A B-tree index creates a multi-level tree structure that breaks a database down into fixed-size blocks or pages. Each level of this tree can be used to link those pages via an address location, allowing one page (known as a node, or internal page) to refer to another with leaf pages at the lowest level. One page is typically the starting point of the tree or the "root." This is where the search for a particular key would begin, traversing a path that terminates in a leaf. That is, the leaf page of an index is the lowest level of the index where all of the keys for the index appear in sorted order. Most pages in such a structure are leaf pages which ultimately refer to specific table rows. At times, multiple different transactions are attempting to insert a key value in a leaf page of the index (e.g., SQL index) simultaneously thereby resulting in a "lock contention" which negatively impacts performance. A "lock contention" occurs whenever one process (transaction) attempts to acquire a "lock" held by another process (transaction). In an attempt to address lock contention, such transactions may be handled in a randomized manner. However, the processing of queries, such as SQL queries, related to such transactions would suffer in performance. Furthermore, in another attempt to address lock contention, the minimum page size of the leaf page of the index may be increased. However, lock contention would only be slightly reduced. Furthermore, as a result of increasing the minimum page size of the leaf page of the index, there will be more required database input/output operations during the index access. As a result, there is not currently a means for effectively handling a lock contention of a leaf page of the index (e.g., SQL index).

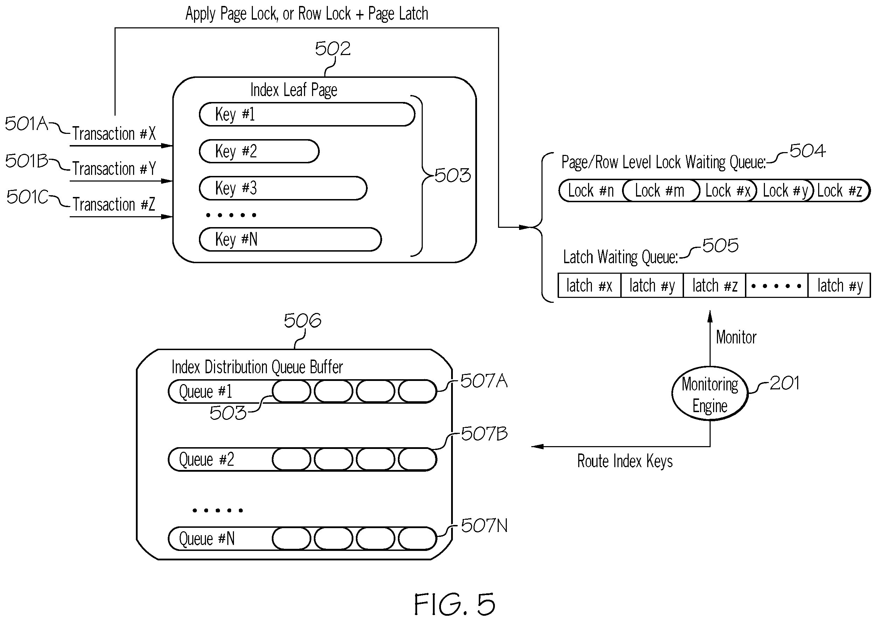

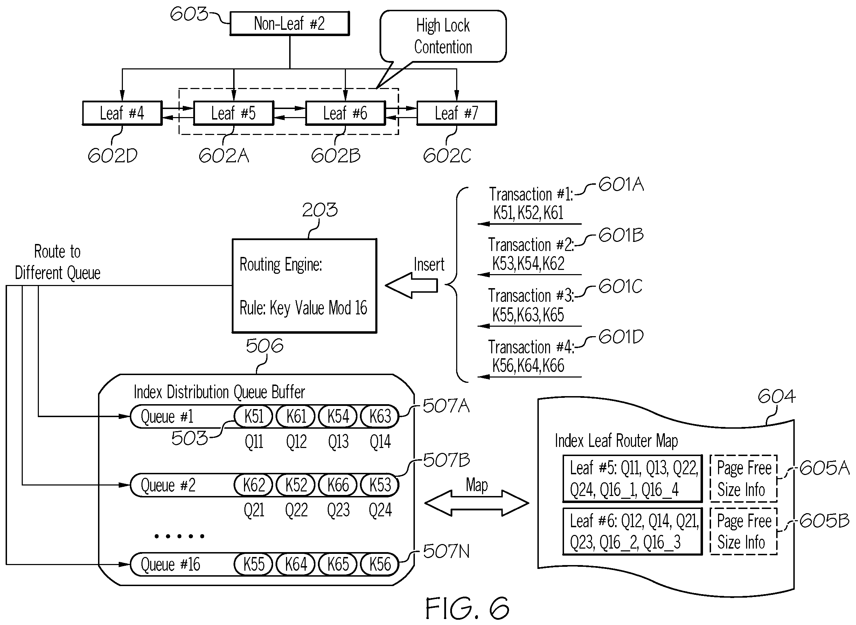

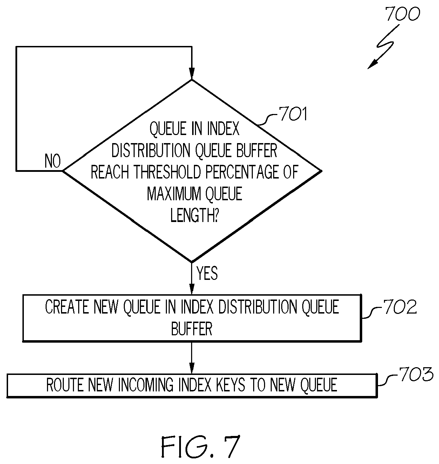

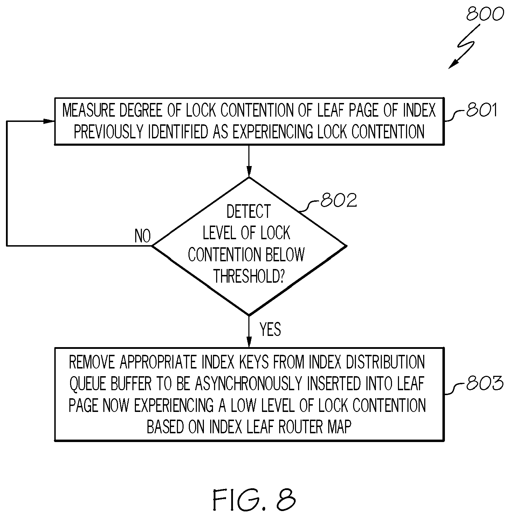

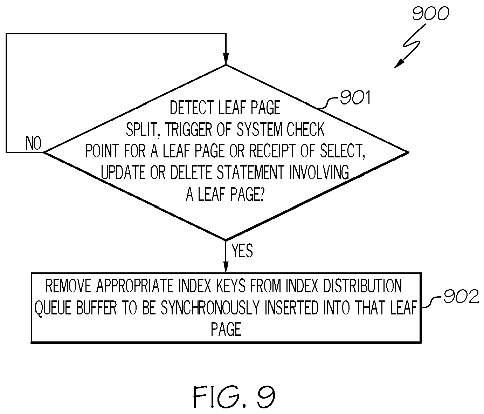

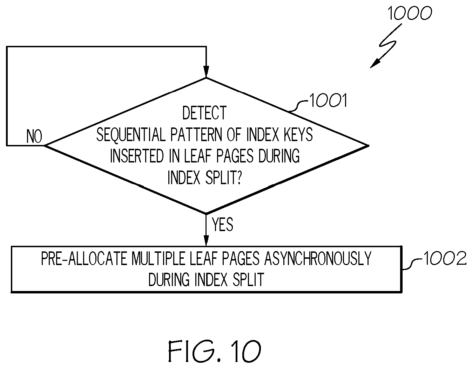

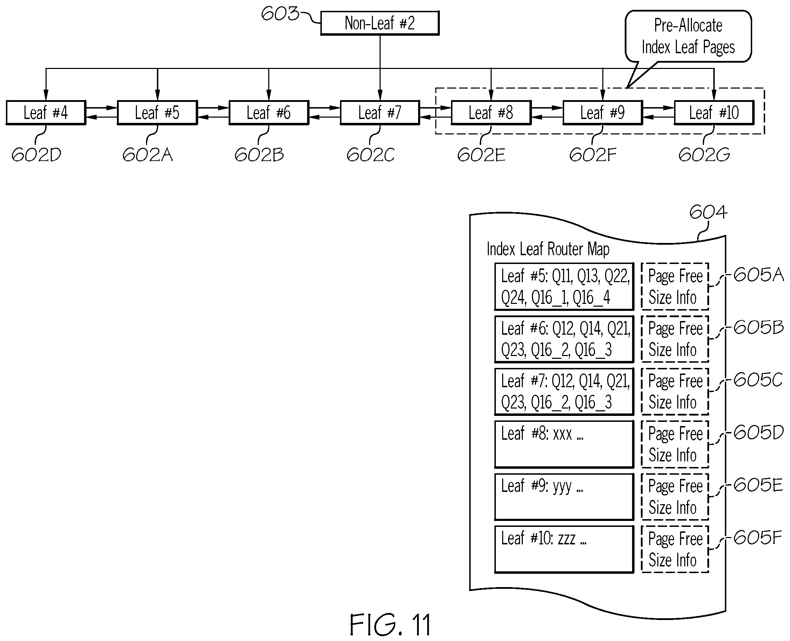

The embodiments of the present disclosure provide a means for effectively handling lock contentions of a leaf page of an index, such as a SQL index, by utilizing a buffer (referred to herein as the "index distribution queue buffer") for storing index keys in the queues of the buffer as opposed to storing such index keys in the leaf page experiencing lock contention. Upon such a leaf page no longer experiencing a lock contention, the appropriate index keys are then removed from the index distribution queue buffer and stored in the appropriate leaf page based on a data structure (referred to herein as the "index leaf router map") that maps the index keys stored in the index distribution queue buffer to the appropriate leaf pages of the index. A description of these and other features is discussed below in connection with Figures 4-11. Figure 4 is a flowchart of a method for handling lock contentions of a leaf page of an index. Figure 5 illustrates monitoring for a lock contention of a leaf page of the index during an insert operation of the index keys in the leaf page. Figure 6 illustrates routing an index key from a transaction, which involves the attempt to store the index key in a leaf page experiencing lock contention, to a queue of the index distribution queue buffer. Figure 7 is a flowchart of a method for handling the storage of additional index keys. Figure 8 is a flowchart of a method for asynchronously inserting index keys in the appropriate leaf page previously experiencing lock contention. Figure 9 is a flowchart of a method for synchronously inserting index keys in a leaf page in response to detecting an index split of the leaf page, a system check point involving the leaf page or the receipt of a select, update or delete statement involving the leaf page. Figure 10 is a flowchart of a method for pre-allocating leaf pages during an index split if a potential future lock contention is detected. Figure 11 illustrates pre-allocating leaf pages during an index split.

As stated above, Figure 4 is a flowchart of a method 400 for handling lock contentions of a leaf page of an index (e.g., SQL index) in accordance with an embodiment of the present disclosure.

Referring to Figure 4, in conjunction with Figures 1-3, in operation 401, monitoring engine 201 of relational database management system 102 monitors for a lock contention of the leaf pages of the index (e.g., SQL index) during an insert operation of the index keys by the transactions.

In operation 402, monitoring engine 201 of relational database management system 102 determines whether a lock contention was detected.

As previously discussed, an insert operation of an index key in the leaf page of the index occurs when a query (e.g., SQL query) requests to add data in database 104, such as a new row of data to a table in database 104. An "index," as used herein, refers to an on-disk structure associated with a table or view that speeds the retrieval of rows from the table or view. In one embodiment, such an index stores "keys" or "index keys" built from one or more columns in the table or view. An "index key," as used herein, refers to the keys of the index (e.g., SQL index), which enable relational database management system 102 to find the row or rows associated with the key values quickly and efficiently. Such an index key corresponds to a value (e.g., 123242), variable characters (e.g., "Smith1"), etc.. The storing of such a key value in the index is referred to herein as a "transaction."

Furthermore, as previously discussed, in one embodiment, the index keys are stored in a B-tree structure, where such a B-tree index includes a multi-level tree structure that breaks a database down into fixed-size blocks or pages. Each level of this tree can be used to link those pages via an address location, allowing one page (known as a node, or internal page) to refer to another with leaf pages at the lowest level. One page is typically the starting point of the tree or the "root." This is where the search for a particular key would begin, traversing a path that terminates in a leaf. That is, the "leaf page" of an index is the lowest level of the index where all of the keys for the index appear in sorted order.

In one embodiment, monitoring engine 201 monitors for a lock contention of such a leaf page in the index during an insert operation of the index keys in the leaf page. A "lock contention," as used herein, refers to the transactions attempt to insert a key value in a leaf page of the index simultaneously. That is, a "lock contention," occurs whenever one process (transaction) attempts to acquire a "lock" held by another process (transaction). In one embodiment, a "lock" on a leaf page to prevent other processes (transactions) from utilizing the leaf page may be accomplished by a "page level lock." A "page level lock," as used herein, refers to locking the entire leaf page. Alternatively, a process (transaction) may lock a row of a leaf page, such as via a "row lock plus page latch." A "row lock," as used herein, refers to locking a particular row of the leaf page and a "page latch," as used herein, refers to a mechanism managed by relational database management system 102 (e.g., SQL server) and not by users in which relational database management system 102 imposes a "latch" or "hold" to the leaf page to prevent access. A "row lock plus page latch," as used herein, refers to the combination of a "row lock" and a "page latch."

Examples of software tools utilized by monitoring engine 201 to perform such monitoring include, but not limited to, SolarWinds^{®} Database Performance Analyzer, Paessler^{®} PRG Network Monitor, SQL Power Tools, Redgate^{®} SQL Monitor, Nagios^{®}, Opsview^{®}, etc.

An illustration of monitoring by monitoring engine 201 for a lock contention of a leaf page of the index during an insert operation of the index keys in the leaf page is discussed below in connection with Figure 5.

Referring to Figure 5, Figure 5 illustrates monitoring for a lock contention of a leaf page of the index during an insert operation of the index keys in the leaf page in accordance with an embodiment of the present disclosure.

As shown in Figure 5, multiple transactions 501A-501C (identified as "Transaction #X," "Transaction #Y," and "Transaction #Z," respectively, in Figure 5) attempt to store index keys in the leaf page 502 of the index, which already stores a certain number of index keys 503 (identified as "Key #1," "Key #2," "Key #3," ... "Key #N," where N is a positive integer number, in Figure 5). Transactions 501A-501C may collectively or individually be referred to as transactions 501 or transaction 501, respectively. Index keys 503 may collective or individually be referred to as index keys 503 or index key 503, respectively.

When each transaction 501 attempts to store an index key 503 in a leaf page, such as leaf page 502, transaction 501 applies either a page lock or a row lock plus a page latch. The page or row locks to be implemented are stored in the "page/row level lock waiting queue" 504, which includes a listing of the page/row locks to be implemented (identified as "Lock #n," "Lock #m," "Lock #x," "Lock #y," and "Lock #z" in Figure 5). It is noted that the symbol "/," as used herein, means "or." Hence, "page/row" level lock waiting queue refers to a page level lock waiting queue or a row level lock waiting queue.

In one embodiment, monitoring engine 201 detects a lock contention based on the length of page/row level lock waiting queue 504. In one embodiment, such a lock contention may be based on a threshold percentage of the entire length of queue 504. In one embodiment, such a threshold percentage may be user-specified.

Furthermore, as illustrated in Figure 5, in one embodiment, monitoring engine 201 detects a lock contention based on the length of the latch waiting queue 505, which stores the various page latches to be implemented (latches put in place for various leaf pages) (e.g., identified as "Latch #x," "Latch #y," "Latch #z," ... "Latch #y" in Figure 5). For example, such a lock contention may be based on a threshold percentage of the entire length of queue 505. In one embodiment, such a threshold percentage may be user-specified.

Furthermore, as illustrated in Figure 5, based on such monitoring by monitoring engine 201, index keys 503 will be routed to index distribution queue buffer 506 as discussed in further detailed below.

Additionally, as shown in Figure 5, index distribution queue buffer 506 includes queues 507A-507N (identified as "Queue #1," "Queue #2," ... "Queue #N," where N is a positive integer number in Figure 5). Queues 507A-507N may collectively or individually be referred to as queues 507 or queue 507, respectively. Each queue 507 stores one or more index keys 503. A further discussion regarding the storing of index keys 503 in queues 507 of index distribution queue buffer 506 is provided further below.

While Figure 5 illustrates a particular number of entries in queues 504, 505, it is noted that Figure 5 many include any number of entries in queues 504, 505. Similarly, buffer 506 may include any number of queues 507 and each queue 507 may include any number of entries to store any number of index keys 503. Furthermore, leaf page 502 may store any number of index keys 503. It is noted that element number 503 refers to those index keys stored in a leaf page, such as leaf page 502, as well as those index keys stored in queue 507 of buffer 506.

Returning to operation 402 of Figure 4, in conjunction with Figures 1-3 and 5, if a lock contention was not detected, then monitoring engine 201 of relational database management system 102 continues to monitor for a lock contention of the leaf pages of the index (e.g., SQL index) during an insert operation of the index keys by transactions 501 in operation 401.

If, however, a lock contention was detected, then, in operation 403, routing engine 203 of relational database management system 102 routes the next index key 503 (intended to be stored in the leaf page identified as exhibiting a lock contention) to a queue 507 of index distribution queue buffer 506 thereby moving the lock contention to a different leaf page as shown in Figure 6.

Referring to Figure 6, Figure 6 illustrates routing an index key 503 from a transaction, which involves the attempt to store index key 503 in a leaf page experiencing lock contention, to a queue 507 (Figure 5) of index distribution queue buffer 506 (Figure 5), where the stored index key 503 is mapped to the leaf page experiencing the lock contention, in accordance with an embodiment of the present disclosure.

As shown in Figure 6, transactions 601A-601D (labeled as "Transaction #1," "Transaction #2," "Transaction #3," and "Transaction #4," respectively in Figure 6) are attempting to store index keys 503 (labeled as "K51," "K52," and "K61" for transaction 601A, labeled as "K53," "K54," and "K62," for transaction 601B, labeled as "K55," "K63," and "K65," for transaction 601C and labeled "K56," "K64," and "K66" for transaction 601D in Figure 6) in leaf pages 602A-602B (identified as "Leaf #5" and "Leaf #6," respectively, in Figure 6), which are experiencing lock contention. As a result, routing engine 203 routes such index keys 503 to various queue 507 of index distribution queue buffer 506 as shown in Figure 6. Furthermore, as shown in Figure 6, by routing such index keys 503 to various queues 507 of index distribution queue buffer 506, the area of lock contention may be moved to another leaf page, such as leaf page 602C (identified as "Leaf #7" in Figure 6). For completeness, it is noted that in the index (e.g., SQL index), each of the leaf pages shown in Figure 6 (602A-602D, where leaf page 602D is identified as "Leaf #4" in Figure 6) are the children of non-leaf page 603 (identified as "Non-Leaf #2" in Figure 6) (located at an intermediate level of the structure (B-tree) of the index), which is one or more levels below the root node (not shown in Figure 6). Transactions 601A-601D may collectively or individually be referred to as transactions 601 or transaction 601, respectively. Leaf pages 602A-602D may collectively or individually be referred to as leaf pages 602 or leaf page 602, respectively. While Figure 6 illustrates four transactions 601, it is noted that any number of transactions 601 may be attempting to store index keys 503 in any number of leaf pages 602. Furthermore, the index (e.g., SQL index) may include any number of leaf pages 602 and non-leaf pages 603.

In one embodiment, routing engine 203 routes such index keys 503 to a queue 507 of index distribution queue buffer 506 in terms of specific rules (e.g., hash, such as modular hashing as shown in Figure 6, where the hash value = key value mod 16). For example, based on applying such specific rules, index key K51 is stored in queue position Q11 of queue 507A, index key 61 is stored in queue position Q12 of queue 507A, index key K54 is stored in queue position Q13 of queue 507A and index key K63 is stored in queue position Q14 of queue 507A as shown in Figure 6. Similarly, index key K62 is stored in queue position Q21 of queue 507B, index key K52 is stored in queue position Q22 of queue 507B, index key K66 is stored in queue position Q23 of queue 507B and index key K53 is stored in queue position Q24 of queue 507B as shown in Figure 6. Furthermore, index keys K55, K64, K65 and K56 are stored in queue 507N as shown in Figure 6.

In one embodiment, index keys 503 that are stored in queues 507 of index distribution queue buffer 506 are synchronized via compare-and-swap. "Compare-and-swap," as used herein, refers to an atomic instruction used in multithreading to achieve synchronization. It compares the contents of a memory location with a given value and, only if they are the same, modifies the contents of that memory location to a new given value. For example, in one embodiment, the queue count, queue space used and queue tail pointer may be used to provide information pertaining to the structure of queue 507 in index distribution queue buffer 506, which is used in the "compare-and-swap" process.

Returning to Figure 4, in conjunction with Figures 1-3 and 5-6, in operation 404, mapping engine 204 of relational database management system 102 maps index key 503 (e.g., "K51") that was stored in queue 507 (e.g., queue 507A) of index distribution queue buffer 506 to the particular leaf page 602 (e.g., leaf page 602A) experiencing lock contention where transaction 601 (e.g., transaction 601A) originally attempted to store index key 503 (e.g., "K51"). In one embodiment, such mapping is stored by mapping engine 204 in a data structure referred to herein as the "index leaf router map" 604 as shown in Figure 6.

Referring again to Figure 6, index leaf router map 604 stores a mapping of index keys 503 that are stored in queue 507 of index distribution queue buffer 506 to particular leaf pages 602 of the index (e.g., SQL index). For example, identifiers of the locations of the storage of index keys 503 (e.g., queue positions Q11, Q13, Q22, Q24, Q16_1, Q16_4) are mapped to leaf page 602A (identified as "Leaf #5" in Figure 6) as shown in Figure 6. Similarly, the identifiers of the locations of the storage of index keys 503 (e.g., queue positions Q12, Q14, Q21, Q23, Q16_2, Q16_3) are mapped to leaf page 602B (identified as "Leaf #6" in Figure 6) as shown in Figure 6.

In one embodiment, index leaf router map 604 also stores the page free size information 605A-605B for such leaf pages 602 (e.g., leaf pages 602A-602B, respectively) as shown in Figure 6. "Page free size information" 605A-605B may collectively or individually be referred to herein as page free size information 605. Such page free size information 605, as used herein, refers to the amount of memory space available in leaf page 602 to store index keys 503. As previously discussed, in one embodiment, monitoring engine 201 is configured to track the amount of memory being used by the storage of index keys 503, and hence, is able to determine the amount of memory space left over to store additional index keys 503.

Furthermore, as discussed above, in one embodiment, the mapping of the memory locations of index keys 503 in queues 507 of index distribution queue buffer 506 with the identifiers of the various leaf pages 602 of the index (e.g., SQL index) are synchronized via compare-and-swap by mapping engine 204.

After routing index keys 503 to queues 507 of index distribution queue buffer 506 as opposed to storing such index keys 503 in leaf pages 602 experiencing lock contention, queues 507 of index distribution queue buffer 506 may be added/deleted dynamically based on the degree of lock contention experienced by leaf pages 602 of the index.

For example, in one embodiment, buffer engine 202 dynamically adds or deletes queues 507 in index distribution queue buffer 506 based on the degree of lock contention of leaf pages 602 of the index (e.g., SQL index). As discussed above, in one embodiment, the degree or level of lock contention at a leaf page of the index is determined by monitoring engine 201 based on the number of transactions attempting to store an index key 503 in leaf page 602 as well as based on the page free size information 605. If there is a need to increase the number of queues 507 in index distribution queue buffer 506 to store additional new index keys 503, then buffer engine 202 dynamically adds queue 507 in index distribution queue buffer 506. Conversely, if there is an oversupply of queues 507 in index distribution queue buffer 506 to handle the current degree of lock contention of leaf pages 602 of the index, then buffer engine 202 dynamically removes or deletes queues 507 in index distribution queue buffer 506.

For example, once queue 507 of index distribution queue buffer 506 reaches a threshold percentage of a maximum queue length, buffer engine 202 of relational database management system 102 may create a new queue 507 to handle the storage of additional index keys 503 if there are no other queues 507 to handle any additional storage of index keys 503 as discussed below in connection with Figure 7.

Figure 7 is a flowchart of a method 700 for handling the storage of additional index keys 503 by creating a new queue 507 in index distribution queue buffer 506 when there are no other queues 507 to handle the storage of these additional index keys 503 in accordance with an embodiment of the present disclosure.

Referring to Figure 7, in conjunction with Figures 1-3 and 5-6, in operation 701, buffer engine 202 of relational database management system 102 determines whether queue 507 (e.g., queue 507A) in index distribution queue buffer 506 reaches a threshold percentage of a maximum queue length, such as during the situation in which the other queues 507 in index distribution queue buffer 506 lack the capacity to store additional index keys 503.

In one embodiment, such a threshold percentage may be user-specified. In one embodiment, information concerning the structure of index distribution queue buffer 506, including its queues 507, may be stored in a data structure, which may reside within a storage device (e.g., memory 305, disk unit 308) of relational database management system 102. In one embodiment, such information includes the maximum length of queue 507, including the designated threshold percentage of its maximum queue length in which an additional queue 507 should be created by buffer engine 202.

If there are no queues 507 in index distribution queue buffer 506 that have reached a threshold percentage of a maximum queue length, then buffer engine 202 continues to determine whether queue 507 in index distribution queue buffer 506 reaches a threshold percentage of a maximum queue length in operation 701.

If, however, there is a queue 507 (e.g., queue 507A) in index distribution queue buffer 506 that has reached a threshold percentage of a maximum queue length, such as during the situation in which the other queues 507 in index distribution queue buffer 506 lack the capacity to store additional index keys 503, then, in operation 702, buffer engine 202 of relational database management system 102 creates a new queue 507 in index distribution queue buffer 506.

In operation 703, routing engine 203 of relational database management system 102 routes new incoming index keys 503 to the newly created queue 507 as discussed above.

Furthermore, in situations in which there is a low level or degree of lock contention at a leaf page 602 previously experiencing lock contention, then index keys 503 previously attempted to be stored in such a leaf page 602 by transactions 601 will be removed from index distribution queue buffer 506 and stored in the appropriate leaf page 602 using index leaf router map 604 as discussed below in connection with Figure 8.

Figure 8 is a flowchart of a method 800 for asynchronously inserting index keys 503 in the appropriate leaf page 602 previously experiencing lock contention for which such index keys 503 were previously attempted to be stored in such a leaf page 602 by transactions 601 in accordance with an embodiment of the present disclosure.

Referring to Figure 8, in conjunction with Figures 1-3 and 5-6, in operation 801, monitoring engine 201 of relational database management system 102 measures the degree of lock contention of leaf page 602 (e.g., leaf page 602A) of the index previously identified as experiencing lock contention.

In operation 802, monitoring engine 201 of relational database management system 102 determines whether the level of lock contention at such a leaf page 602 previously experiencing lock contention is below a threshold level, which may be user-specified. When such a situation occurs, it may be said that leaf page 602 is experiencing a low level of lock contention such that it is now safe to store additional index keys 503. A "low level" of a lock contention, as used herein, refers to a leaf page that is deemed to no longer be experiencing a lock contention.

As discussed above, in one embodiment, monitoring engine 201 is configured to detect a level of lock contention at leaf page 602 of the index, such as determining if it is below a threshold level, which may be user-specified. In one embodiment, the degree or level of lock contention at a leaf page of the index is determined by monitoring engine 201 based on the number of transactions attempting to store an index key 503 in leaf page 602 as well as based on the page free size information 605. The "page free size information," as used herein, indicates the amount of memory space available in leaf page 602 to store index keys 503. In one embodiment, each leaf page 602 of the index (e.g., SQL index) is allotted a particular size (e.g., 3 KB), such as by an expert. In one embodiment, monitoring engine 201 is configured to track the amount of memory being used by the storage of index keys 503, and hence, is able to determine the amount of memory space left over to store additional index keys 503. Examples of software tools utilized by monitoring engine 201 to track memory usage of leaf pages 602 of the index (e.g., SQL index) include, but not limited to, SQLShack, ApexSQL by Quest^{®}, etc.

In one embodiment, based on such memory usage of leaf pages 602 of the index and the number of index keys 503 to be written to leaf page 602, a degree or level of lock contention at leaf page 602 may be determined. For example, if the number of index keys 503 to be written to leaf page 602 require a memory space that exceeds 50% of the remaining available memory space in leaf page 602, then leaf page 602 may be said to be experiencing a lock contention. On the other hand, if the number of index keys 503 to be written to leaf page 602 require a memory space that is less than 25% of the remaining available memory space in leaf page 602, then leaf page 602 may be said to be experiencing a low level of a lock contention.

If the level of lock contention at leaf page 602 previously experiencing lock contention is not below the threshold level, then detector engine 205 continues to measure the degree of lock contention of leaf page 602 of the index previously identified as experiencing lock contention in operation 801.

If, however, the level of lock contention at leaf page 602 previously experiencing lock contention is below the threshold level, then, in operation 803, routing engine 203 of relational database management system 102 removes the appropriate index keys 503 from index distribution queue buffer 506 to be asynchronously inserted into leaf page 602 that is now experiencing a low level of lock contention based on index leaf router map 604 as illustrated in Figure 6.

Referring to Figure 6, if, for example, leaf page 602A ("Leaf #5") is now determined to be experiencing a low level of lock contention, then routing engine 203 identifies which index keys 503 are to be removed from index distribution queue buffer 506 and inserted in leaf page 602A based on identifying the queue locations storing such index keys 503 that are mapped to such a leaf page 602A in index leaf router map 604. For instance, the identifiers of the locations of the storage of index keys 503 (queue positions Q11, Q13, Q22, Q24, Q16_1 and Q16_4) are mapped to leaf page 602A. As a result, routing engine 203 removes such index keys 503 from queues 507 of index distribution queue buffer 506 to be stored in leaf page 602A, such as in a batch.

In one embodiment, routing engine 203 only obtains the number of index keys 503 from index distribution queue buffer 506 that leaf page 602 (e.g., leaf page 602A) can currently store without reaching the "lock contention" status (i.e., a high level of lock contention as opposed to the low level of lock contention). In one embodiment, the status of the lock contention of leaf page 602 (e.g., leaf page 602A) is continuously monitored by monitoring engine 201, and, as a result, the number of index keys 503 stored in index distribution queue buffer 506 as opposed to being stored in leaf page 602 (e.g., leaf page 602A) or the number of index keys 503 being removed from index distribution buffer 506 and inserted in leaf page 602 (e.g., leaf page 602A) by routing engine 203 is dynamically performed.

Additionally, in one embodiment, index keys 503 may be removed from index distribution queue buffer 506 and inserted synchronously in leaf page 602 (e.g., leaf page 602A) in response to detecting a split of this leaf page 602 (e.g., leaf page 602A), a trigger of a system check point for this leaf page 602 (e.g., leaf page 602A) or the receipt of a select, update or delete statement (e.g., SELECT SQL statement, UPDATE SQL statement, DELETE SQL statement) involving such a leaf page 602 (e.g., leaf page 602A) as discussed below in connection with Figure 9.

Figure 9 is a flowchart of a method 900 for synchronously inserting index keys 503 in leaf page 602 (e.g., leaf page 602A) in response to detecting an index split of leaf page 602 (e.g., leaf page 602A), a system check point involving leaf page 602 (e.g., leaf page 602A) or receipt of a select, update or delete statement involving leaf page 602 (e.g., leaf page 602A) in accordance with an embodiment of the present disclosure.

Referring to Figure 9, in conjunction with Figures 1-3 and 5-6, in operation 901, detector engine 205 of relational database management system 102 determines whether a leaf page split, a trigger of a system check point for leaf page 602 or receipt of a select, update or delete statement involving leaf page 602 is detected.

As discussed above, in one embodiment, detector engine 205 is configured to detect a leaf page split, a trigger of a system check point for a leaf page 602 and receipt of a select, update or delete statement involving a leaf page 602.

As discussed above, a "split' of leaf page 602, as used herein, refers to the situation when there is not enough space to add new data (e.g., a new row) required to be on a certain leaf page resulting in that leaf page 602 having to split. When a split occurs, leaf page 602 may be split into two pages, with roughly half of the rows of that original leaf page 602 on each of the leaf pages 602. As a result, detector engine 205 detects a leaf page split upon the creation of a new leaf page 602 to store half of the data stored in another leaf page 602.

Furthermore, as discussed above, a "system check point" for leaf page 602, as used herein, refers to a test operation that verifies data, such as index keys 503, retrieved from leaf page 602 by comparing that data with a baseline copy. In one embodiment, detector engine 205 detects such a system check point based on the detection of the issuance of a checkpoint by a database engine 206 (e.g., SQL server database engine) of relational database management system 102.

Additionally, as discussed above, the select statement, such as the SQL SELECT statement, is used to select data from database 104. The update statement, such as the SQL UPDATE statement, is used to modify the existing records in a table of database 104. The delete statement, such as the SQL DELETE statement, is used to delete existing records in a table of database 104. In one embodiment, detector engine 205 is configured to detect the receipt of such statements based on identifying such statements in the query received by relational database management system 102 from computing device 101. In one embodiment, detector engine 205 utilizes natural language processing to identify such statements in the query, where such terms are stored in a data structure populated by an expert. In one embodiment, such a data structure is stored in a storage device (e.g., memory 305, disk unit 308) of relational database management system 102.

If a leaf page split, a trigger of a system check point for leaf page 602 or receipt of a select, update or delete statement involving leaf page 602 is not detected, then detector engine 205 continues to determine whether a leaf page split, a trigger of a system check point for leaf page 602 or receipt of a select, update or delete statement involving leaf page 602 is detected in operation 901.

If, however, a leaf page split, a trigger of a system check point for leaf page 602 or receipt of a select, update or delete statement involving leaf page 602 is detected, then, in operation 902, routing engine 203 of relational database management system 102 removes index keys 503 from index distribution queue buffer 506 to be inserted synchronously to leaf page 602 (e.g., leaf page 602A) in response to detecting a leaf page split for such a leaf page 602 (e.g., leaf page 602A), a trigger of a system check involving such a leaf page 602 (e.g., leaf page 602A) or receipt of a select, update or delete statement involving such a leaf page 602 (e.g., leaf page 602A) as illustrated in Figure 6.

Referring to Figure 6, if, for example, a leaf page split for leaf page 602A, a trigger of a system check involving leaf page 602A or receipt of a select, update or delete statement involving leaf page 602A is detected, then routing engine 203 identifies which index keys 503 are to be removed from index distribution queue buffer 506 and inserted in leaf page 602A based on identifying the queue locations storing such index keys 503 that are mapped to such a leaf page 602A in index leaf router map 604. For instance, the identifiers of the locations of the storage of index keys 503 (queue positions Q11, Q13, Q22, Q24, Q16_1 and Q16_4) that are mapped to leaf page 602A are stored in index leaf router map 604. As a result, routing engine 203 removes such index keys from queues 507 of index distribution queue buffer 506 to be stored in leaf page 602A, such as in a batch.

In one embodiment, routing engine 203 only obtains the number of index keys 503 from index distribution queue buffer 506 that leaf page 602 (e.g., leaf page 602A) can currently store without reaching the "lock contention" status (i.e., a high level of lock contention as opposed to the low level of lock contention). In one embodiment, the status of the lock contention of leaf page 602 (e.g., leaf page 602A) is continuously monitored by monitoring engine 201, and, as a result, the number of index keys 503 stored in index distribution queue buffer 506 as opposed to being stored in leaf page 602 (e.g., leaf page 602A) or the number of index keys 503 being removed from index distribution buffer 506 and inserted in leaf page 602 (e.g., leaf page 602A) by routing engine 203 is dynamically performed.

Furthermore, in one embodiment, relational database management system 102 may pre-allocate multiple leaf pages 602 asynchronously to reduce the possibility of a future lock contention after an index split when a sequential insert pattern is detected as discussed below in connection with Figure 10. "Pre-allocation," as used herein, guarantees that memory space in such leaf pages 602 is available when routing engine 203 needs to store index keys 503 in such leaf pages 602.

Figure 10 is a flowchart of a method 1000 for pre-allocating leaf pages 602 during an index split if a potential future lock contention is detected in accordance with an embodiment of the present disclosure.

Referring to Figure 10, in conjunction with Figures 1-3 and 5-6, in operation 1001, detector engine 205 of relational database management system 102 determines whether a sequential pattern of index keys 503 is detected as being inserted in leaf pages 602 during an index split.

If a sequential pattern of index keys 503 is not detected as being inserted in leaf pages 602 during an index split, then detector engine 205 continues to determine whether a sequential pattern of index keys 503 is detected as being inserted in leaf pages 602 during an index split in operation 1001.

If, however, a sequential pattern of index keys 503 is detected as being inserted in leaf pages 602 during an index split, then, in operation 1002, detector engine 205 of relational database management system 102 pre-allocates multiple leaf pages 602 of the index asynchronously to reduce a possible lock contention scenario.

As discussed above, when an index split occurs, leaf page 602 may be split into two pages, with roughly half of the rows of that original leaf page on each of the leaf pages 602. In one embodiment, if a sequential pattern (a continuous movement pattern) of index keys 503 are inputted into such leaf pages 602, then detector engine 205 pre-allocates multiple leaf pages 602 of the index asynchronously to reduce a possible lock contention scenario. A lock contention may be said to more likely occur in such a situation since the sequential pattern of index keys 503 may continue in such leaf pages 602. In one embodiment, such a continuous movement pattern is detected by detector engine 205 by using high/low key values from the previous leaf pages 602 to predict the key values as non-leaf key values against those new pre-allocated leaf pages 602. An illustration of such a pre-allocation is shown in Figure 11 in accordance with an embodiment of the present disclosure.

Figure 11 illustrates pre-allocating leaf pages during an index split in accordance with an embodiment of the present disclosure.

Referring now to Figure 11, leaf pages 602E-602G (identified as "Leaf #8," "Leaf #9," and "Leaf #10," respectively in Figure 11) are pre-allocated asynchronously to reduce a possible lock contention scenario due to the detection of a sequential pattern (a continuous movement pattern) of index keys 503 being inputted into leaf pages 602 (e.g., leaf pages 602A-602D) during an index split. As a result of the pre-allocation, memory space in leaf pages 602E-602G are available when routing engine 203 needs to store index keys 503 from the detected sequential pattern of index keys 503 in such leaf pages 602.

Furthermore, in one embodiment, mapping engine 204 pre-allocates the mapping of such pre-allocated leaf pages 602 in index leaf router map 604 as shown in Figure 11. For example, index leaf router map 604 stores the mapping of index keys 503 stored in leaf pages 602A, 602B and 602C (identified as "Leaf #5," "Leaf #6," and "Leaf #7," respectively in Figure 11). Furthermore, index leaf router map 604 stores the page free size information 605A-605C for leaf pages 602A-602C, respectively. Additionally, with respect to pre-allocated leaf pages 602E-602G, mapping engine 204 pre-allocates the mapping of such pre-allocated leaf pages 602 in index leaf router map 604 that also includes the storing of page free size information 605D-605F for such pre-allocated leaf pages 602E-602G, respectively.

As a result of the foregoing, embodiments of the present disclosure provide a means for effectively handling a lock contention of a leaf page of an index, such as a SQL index, by utilizing a buffer (referred to herein as the "index distribution queue buffer") for storing the index keys in queues of the buffer as opposed to storing such index keys in the leaf page experiencing lock contention. Upon such a leaf page no longer experiencing such lock contention, the appropriate index keys are then removed from the index distribution queue buffer and stored in the appropriate leaf page based on a data structure (referred to herein as the "index leaf router map") that maps the index keys stored in the index distribution queue buffer to the appropriate leaf pages of the index.

Furthermore, the principles of the present disclosure improve the technology or technical field involving relational database management systems. As discussed above, SQL queries, such as the SQL INSERT INTO statement, may be received and processed by the relational database management system (e.g., SQL server). Such queries (e.g., SQL INSERT INTO statement) may be used to add new rows of data to a table in the database. When such a scenario occurs, a related index defined on this table needs to be updated. An index is an on-disk structure associated with a table or view that speeds the retrieval of rows from the table or view. An index typically contains keys built from one or more columns in the table or view. These keys are stored in a structure (B-tree) that enables the relational database management system to find the row or rows associated with the key values quickly and efficiently. As a result, when a new row of data is added to a table in the database, the index needs to be updated to include the key value associated with such a row of data. The storing of such a key value in the index is referred to herein as a "transaction." A B-tree index creates a multi-level tree structure that breaks a database down into fixed-size blocks or pages. Each level of this tree can be used to link those pages via an address location, allowing one page (known as a node, or internal page) to refer to another with leaf pages at the lowest level. One page is typically the starting point of the tree or the "root." This is where the search for a particular key would begin, traversing a path that terminates in a leaf. That is, the leaf page of an index is the lowest level of the index where all of the keys for the index appear in sorted order. Most pages in such a structure are leaf pages which ultimately refer to specific table rows. At times, multiple different transactions are attempting to insert a key value in a leaf page of the index (e.g., SQL index) simultaneously thereby resulting in a "lock contention" which negatively impacts performance. A "lock contention" occurs whenever one process (transaction) attempts to acquire a "lock" held by another process (transaction). In an attempt to address lock contention, such transactions may be handled in a randomized manner. However, the processing of queries, such as SQL queries, related to such transactions would suffer in performance. Furthermore, in another attempt to address lock contention, the minimum page size of the leaf page of the index may be increased. However, lock contention would only be slightly reduced. Furthermore, as a result of increasing the minimum page size of the leaf page of the index, there will be more required database input/output operations during the index access. As a result, there is not currently a means for effectively handling a lock contention of a leaf page of the index (e.g., SQL index).

Embodiments of the present disclosure improve such technology by monitoring leaf pages of an index (e.g., SQL index) for a lock contention during an insert operation of index keys by the transactions. A "lock contention," as used herein, refers to whenever one process (transaction) attempts to acquire a "lock" on a leaf page of the index held by another process (transaction). An "index," as used herein, refers to an on-disk structure associated with a table or view that speeds the retrieval of rows from the table or view. In one embodiment, such an index stores "keys" or "index keys" built from one or more columns in the table or view. An "index key," as used herein, refers to the keys of the index (e.g., SQL index), which enable a relational database management system to find the row or rows associated with the key values quickly and efficiently. The storing of such a key value in the index is referred to herein as a "transaction." Furthermore, the "leaf page" of an index is the lowest level of the index where all of the keys for the index appear in sorted order. Upon detecting a lock contention of a leaf page, the next index key to be inputted into such a leaf page is routed to a queue of a buffer (referred to herein as the "index distribution queue buffer"). The index key that was stored in the queue of the index distribution queue buffer is then mapped to the particular leaf page experiencing the lock contention that the transaction originally attempted to store such an index key. In one embodiment, such mapping is stored in a data structure referred to herein as the "index leaf router map" which stores a mapping of index keys stored in the queues of the index distribution queue buffer to the leaf pages of the index. Upon such a leaf page no longer experiencing such lock contention, the appropriate index keys are then removed from the index distribution queue buffer and stored in the appropriate leaf page based on the mapping of the index leaf router map. In this manner, a lock contention of a leaf page of an index, such as a SQL index, is effectively handled. Furthermore, in this manner, there is an improvement in the technical field involving relational database management systems.

The technical solution provided by the present disclosure cannot be performed in the human mind or by a human using a pen and paper. That is, the technical solution provided by the present disclosure could not be accomplished in the human mind or by a human using a pen and paper in any reasonable amount of time and with any reasonable expectation of accuracy without the use of a computer.

The descriptions of the various embodiments of the present disclosure have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A computer-implemented method for handling lock contentions of a tree-type index, the method comprising:
monitoring (401) for a lock contention of a leaf page (502) of said index during an insert operation of index keys;
routing (403) a first index key (503) to a queue (507) of a buffer (506) in response to detecting said lock contention of said leaf page of said index, wherein said first index key corresponds to a first index key of a transaction (501) to be inserted in said leaf page of said index;
routing a second index key, subsequent to said first index key, to said queue of said buffer, wherein index keys stored in said queue of said buffer are held consistent via compare-and-swap; and
storing (404) a mapping of said first index key stored in said queue of said buffer to said leaf page experiencing said lock contention in a data structure (604), wherein said data structure stores a mapping of index keys stored in queues of said buffer to leaf pages of said index, wherein said data structure (604) comprises an identifier of a location of storage of said first index key in said queue of said buffer along with an identifier of said leaf page (502) experiencing said lock contention, wherein identifiers of locations of storage of index keys in said data structure is held consistent via compare-and-swap.

2. The method as recited in claim 1, wherein said lock contention is detected based on a length of a queue, the queue selected from a list, the list comprising: a page/ row level lock waiting queue (504); and a latch waiting queue (505).

3. The method as recited in any preceding claim further comprising:
monitoring a level of lock contention at a leaf page, based on a number of transactions attempting to store an index key in the leaf page and based on page free size information;
removing (803) index keys (503) from said buffer to be inserted asynchronously in a leaf page (502) based on said data structure (604) in response to detecting a level of lock contention at said leaf page being below a threshold level; and inserting the removed index keys into said leaf page asynchronously.

4. The method as recited in any preceding claim further comprising:
removing (803) index keys (503) from said buffer (506) to be inserted synchronously in a leaf page (502) based on said data structure (604) in response to detecting one of the following selected from the group comprising: a split of said leaf page; a trigger of a system check point for said leaf page; and a select, update or delete statement involving said leaf page; and
inserting the removed index keys into said leaf page synchronously.

5. The method as recited in any preceding claim further comprising:
creating (702) a new queue (507) in said buffer (506) in response to said queue reaching (701) a threshold percentage of a maximum queue length; and
routing (703) new incoming index keys (503) to said new queue.

6. A computer program product for handling lock contentions of a tree-type index, the computer program product comprising: a computer readable storage medium readable by a processing circuit and storing instructions for execution by the processing circuit for performing a method according to any of claims 1 to 5.

7. A system for handling lock contentions of a tree-type index, comprising:
a memory for storing a computer program for handling lock contentions of an index; and
a processor connected to said memory, wherein said processor is configured to execute program instructions of the computer program comprising:
monitoring (401) for a lock contention of a leaf page (502) of said index during an insert operation of index keys;
routing (403) a first index key (503) to a queue (507) of a buffer (506) in response to detecting said lock contention of said leaf page of said index, wherein said first index key corresponds to a first index key of a transaction (501) to be inserted in said leaf page of said index;
routing a second index key, subsequent to said first index key, to said queue of said buffer, wherein index keys stored in said queue of said buffer are held consistent via compare-and-swap, and
storing (404) a mapping of said first index key stored in said queue of said buffer to said leaf page experiencing said lock contention in a data structure (604), wherein said data structure stores a mapping of index keys stored in queues of said buffer to leaf pages of said index, wherein said data structure (604) comprises an identifier of a location of storage of said first index key in said queue of said buffer along with an identifier of said leaf page (502) experiencing said lock contention, wherein identifiers of locations of storage of index keys in said data structure are held consistent via compare-and-swap.

8. The system of claim 7, wherein said lock contention is detected based on a length of a page or a row level lock waiting queue or based on a length of a latch waiting queue.

9. The system of either of claims 7 or 8, wherein the program instructions of the computer program further comprise:
monitoring a level of lock contention at a leaf page, based on a number of transactions attempting to store an index key in the leaf page and based on page free size information;
removing index keys from said buffer to be inserted asynchronously in a leaf page based on said data structure in response to detecting a level of lock contention at said leaf page being below a threshold level; and
inserting the removed index keys into said leaf page asynchronously.

10. The system of any of claims 7 to 9, wherein the program instructions of the computer program further comprise:
removing index keys from said buffer to be inserted synchronously in a leaf page based on said data structure in response to detecting one of the following selected from the group comprising: a split of said leaf page, a trigger of a system check point for said leaf page and a select, update or delete statement involving said leaf page; and
inserting the removed index keys into said leaf page synchronously.

11. A computer program stored on a computer readable medium and loadable into the internal memory of a digital computer, comprising software code portions, when said program is run on a computer, for performing the method of any of claims 1 to 5.

## Patentansprüche

1. Computerrealisiertes Verfahren für die Handhabung von Sperrkonflikten eines Baumstruktur-Indexes, wobei das Verfahren aufweist:
Überwachen (401) auf einen Sperrkonflikt einer Blattseite (502) des Indexes während einer Einfügeoperation von Indexschlüsseln;
Weiterleiten (403) eines ersten Indexschlüssels (503) an eine Warteschlange (507) eines Puffers (506) als Reaktion auf ein Erkennen des Sperrkonflikts der Blattseite des Indexes, wobei der erste Indexschlüssel einem ersten Indexschlüssel einer Transaktion (501) entspricht, der in die Blattseite des Indexes eingefügt werden soll;
Weiterleiten eines zweiten Indexschlüssels im Anschluss an den ersten Indexschlüssel an die Warteschlange des Puffers, wobei Indexschlüssel, die in der Warteschlange des Puffers gespeichert werden, über ein Vergleichen-und-Austauschen konsistent gehalten werden; und
Speichern (404) einer Zuordnung des ersten Indexschlüssels, der in der Warteschlange des Puffers gespeichert wird, in der Blattseite, für die der Sperrkonflikt in einer Datenstruktur (604) vorliegt, wobei die Datenstruktur eine Zuordnung von Indexschlüsseln, die in Warteschlangen des Puffers gespeichert werden, in Blattseiten des Indexes speichert, wobei die Datenstruktur (604) einen Bezeichner eines Speicherorts des ersten Indexschlüssels in der Warteschlange des Puffers zusammen mit einem Bezeichner der Blattseite (502) aufweist, für die der Sperrkonflikt vorliegt, wobei Bezeichner von Speicherorten von Indexschlüsseln in der Datenstruktur über ein Vergleichen-und-Austauschen konsistent gehalten werden.

2. Verfahren nach Anspruch 1, wobei der Sperrkonflikt auf Grundlage einer Länge einer Warteschlange erkannt wird, wobei die Warteschlange aus einer Liste ausgewählt wird, wobei die Liste aufweist: eine Warteschlange (504) für eine Sperrung auf Seiten-/Zeilenebene; und eine Sperrwarteschlange (505).

3. Verfahren nach einem beliebigen vorangegangenen Anspruch, des Weiteren aufweisend:
Überwachen einer Ebene eines Sperrkonflikts in einer Blattseite auf Grundlage einer Anzahl von Transaktionen, die versuchen, einen Indexschlüssel in der Blattseite zu speichern, sowie auf Grundlage von Informationen zur Größe des freien Speicherplatzes in der Seite;
Entfernen (803) von Indexschlüsseln (503) aus dem Puffer, um auf Grundlage der Datenstruktur (604) als Reaktion auf ein Erkennen, dass eine Ebene eines Sperrkonflikts in der Blattseite unter einem Schwellenwert liegt, auf asynchrone Weise in eine Blattseite (502) eingefügt zu werden; und Einfügen der entfernten Indexschlüssel auf asynchrone Weise in die Blattseite.

4. Verfahren nach einem beliebigen vorhergehenden Anspruch, des Weiteren aufweisend:
Entfernen (803) von Indexschlüsseln (503) aus dem Puffer (506), um auf Grundlage der Datenstruktur (604) als Reaktion auf ein Erkennen eines der Folgenden auf synchrone Weise in eine Blattseite (502) eingefügt zu werden, ausgewählt aus der Gruppe, bestehend aus: einer Aufteilung der Blattseite; einem Auslöser eines Systemprüfpunkts für die Blattseite; und einer Auswahl-, Aktualisierungs- oder Löschanweisung, die die Blattseite einbezieht; und
Einfügen der entfernten Indexschlüssel auf synchrone Weise in die Blattseite.

5. Verfahren nach einem beliebigen vorhergehenden Anspruch, des Weiteren aufweisend:
Erzeugen (702) einer neuen Warteschlange (507) in dem Puffer (506) als Reaktion darauf, dass die Warteschlange (701) einen Schwellenprozentsatz einer maximalen Warteschlangenlänge erreicht; und
Weiterleiten (703) neu eingehender Indexschlüssel (503) an die neue Warteschlange.

6. Computerprogrammprodukt für die Handhabung von Sperrkonflikten eines Baumstruktur-Indexes, wobei das Computerprogrammprodukt aufweist: ein computerlesbares Speichermedium, das durch eine Verarbeitungsschaltung lesbar ist und Anweisungen zur Ausführung durch die Verarbeitungsschaltung speichert, um ein Verfahren nach einem beliebigen der Ansprüche 1 bis 5 durchzuführen.

7. System für die Handhabung von Sperrkonflikten eines Baumstruktur-Indexes, aufweisend:
einen Arbeitsspeicher zum Speichern eines Computerprogramms für die Handhabung von Sperrkonflikten eines Indexes; und
einen mit dem Arbeitsspeicher verbundenen Prozessor, wobei der Prozessor konfiguriert wird, um Programmanweisungen des Computerprogramms auszuführen, aufweisend:
Überwachen (401) auf einen Sperrkonflikt einer Blattseite (502) des Indexes während einer Einfügeoperation von Indexschlüsseln; Weiterleiten (403) eines ersten Indexschlüssels (503) an eine Warteschlange (507) eines Puffers (506) als Reaktion auf ein Erkennen des Sperrkonflikts der Blattseite des Indexes, wobei der erste Indexschlüssel einem ersten Indexschlüssel einer Transaktion (501) entspricht, der in die Blattseite des Indexes eingefügt werden soll;
Weiterleiten eines zweiten Indexschlüssels im Anschluss an den ersten Indexschlüssel an die Warteschlange des Puffers, wobei Indexschlüssel, die in der Warteschlange des Puffers gespeichert werden, über ein Vergleichen-und-Austauschen konsistent gehalten werden, und
Speichern (404) einer Zuordnung des ersten Indexschlüssels, der in der Warteschlange des Puffers gespeichert wird, in der Blattseite, für die ein Sperrkonflikt vorliegt, in einer Datenstruktur (604), wobei die Datenstruktur eine Zuordnung von Indexschlüsseln, die in Warteschlangen des Puffers gespeichert werden, in Blattseiten des Indexes speichert, wobei die Datenstruktur (604) einen Bezeichner eines Speicherorts des ersten Indexschlüssels in der Warteschlange des Puffers zusammen mit einem Bezeichner der Blattseite (502) aufweist, für die der Sperrkonflikt vorliegt, wobei Bezeichner von Speicherorten von Indexschlüsseln in der Datenstruktur über ein Vergleichen-und-Austauschen konsistent gehalten werden.

8. System nach Anspruch 7, wobei der Sperrkonflikt auf Grundlage einer Länge einer Warteschlange für eine Sperrung auf Seiten- oder Zeilenebene oder auf Grundlage einer Länge einer Sperrwarteschlange erkannt wird.

9. System nach Anspruch 7 oder 8, wobei die Programmanweisungen des Computerprogramms des Weiteren aufweisen:
Überwachen einer Ebene eines Sperrkonflikts in einer Blattseite auf Grundlage einer Anzahl von Transaktionen, die versuchen, einen Indexschlüssel in der Blattseite zu speichern, sowie auf Grundlage von Informationen zur Größe des freien Speicherplatzes in der Seite;
Entfernen von Indexschlüsseln aus dem Puffer, um auf Grundlage der Datenstruktur als Reaktion auf ein Erkennen, dass eine Ebene eines Sperrkonflikts für die Blattseite unter einem Schwellenwert liegt, auf asynchrone Weise in eine Blattseite eingefügt zu werden; und
Einfügen der entfernten Indexschlüssel auf asynchrone Weise in die Blattseite.

10. System nach einem beliebigen der Ansprüche 7 bis 9, wobei die Programmanweisungen des Computerprogramms des Weiteren aufweisen:
Entfernen von Indexschlüsseln aus dem Puffer, um auf Grundlage der Datenstruktur als Reaktion auf ein Erkennen eines der Folgenden auf synchrone Weise in eine Blattseite eingefügt zu werden, ausgewählt aus der Gruppe, aufweisend: eine Aufteilung der Blattseite, einen Auslöser eines Systemprüfpunkts für die Blattseite und eine Auswahl-, Aktualisierungs- oder Löschanweisung, die die Blattseite einbezieht; und
Einfügen der entfernten Indexschlüssel auf synchrone Weise in die Blattseite.

11. Computerprogrammprodukt, das auf einem computerlesbaren Medium gespeichert wird und in den internen Arbeitsspeicher eines digitalen Computers ladbar ist, das Software-Codeabschnitte aufweist, um bei Ausführung des Programms auf einem Computer das Verfahren nach einem beliebigen der Ansprüche 1 bis 5 durchzuführen.

## Revendications

1. Procédé mis en œuvre par ordinateur pour gérer les conflits de verrouillage d'un index de type arborescent, le procédé comprenant :
la surveillance (401) d'un conflit de verrouillage d'une page de feuille (502) dudit index pendant une opération d'insertion de clés d'index ;
le routage (403) d'une première clé d'index (503) vers une file d'attente (507) d'une mémoire tampon (506) en réponse à la détection dudit conflit de verrouillage de ladite page de feuille dudit index, dans lequel ladite première clé d'index correspond à une première clé d'index d'une transaction (501) à insérer dans ladite page de feuille dudit index ;
le routage d'une deuxième clé d'index, suivant ladite première clé d'index, vers ladite file d'attente de ladite mémoire tampon, dans lequel les clés d'index stockées dans ladite file d'attente de ladite mémoire tampon sont maintenues cohérentes par une opération de comparaison-et-échange ; et
le stockage (404), dans une structure de données (604), d'une mise en correspondance de ladite première clé d'index stockée dans ladite file d'attente de ladite mémoire tampon avec ladite page de feuille subissant ledit conflit de verrouillage, dans lequel ladite structure de données stocke une mise en correspondance des clés d'index stockées dans des files d'attente de ladite mémoire tampon avec des pages de feuilles dudit index, dans lequel ladite structure de données (604) comprend un identifiant d'un emplacement de stockage de ladite première clé d'index dans ladite file d'attente de ladite mémoire tampon ainsi qu'un identifiant de ladite page de feuille (502) subissant ledit conflit de verrouillage, dans lequel les identifiants des emplacements de stockage des clés d'index dans ladite structure de données sont maintenus cohérents par une opération de comparaison-et-échange.

2. Procédé selon la revendication 1, dans lequel ledit conflit de verrouillage est détecté sur la base de la longueur d'une file d'attente, la file d'attente étant sélectionnée parmi une liste, la liste comprenant : une file d'attente de verrouillage au niveau page/ligne (504) ; et une file d'attente de verrouillage (505).

3. Procédé selon une quelconque des revendications précédentes, comprenant en outre :
la surveillance d'un niveau de conflit de verrouillage au niveau d'une page de feuille, sur la base d'un nombre de transactions tentant de stocker une clé d'index dans la page de feuille et sur la base d'informations relatives à l'espace libre de la page ;
la suppression (803) de clés d'index (503) de ladite mémoire tampon, à être insérés de manière asynchrone dans une page de feuille (502) sur la base de ladite structure de données (604), en réponse à la détection d'un niveau de conflit de verrouillage de ladite page de feuille inférieure à un niveau seuil ; et l'insertion de manière asynchrone les clés d'index supprimées dans ladite page de feuille.

4. Procédé selon une quelconque des revendications précédentes, comprenant en outre :
la suppression (803) de clés d'index (503) de ladite mémoire tampon (506) pour les insérer de manière synchrone dans une page de feuille (502) sur la base de ladite structure de données (604), en réponse à la détection d'un des évènements suivants choisis dans le groupe comprenant : une scission de ladite page de feuille ; un déclenchement d'un point de contrôle de système pour ladite page de feuille ; et une instruction de sélection, de mise à jour ou d'effacement impliquant ladite page de feuille ; et
l'insertion de manière synchrone les clés d'index supprimées dans ladite page de feuille.

5. Procédé selon une quelconque des revendications précédentes, comprenant en outre :
la création (702) d'une nouvelle file d'attente (507) dans ladite mémoire tampon (506) en réponse au fait que ladite file d'attente atteint (701) un pourcentage seuil d'une longueur maximale de file d'attente ; et
le routage (703) de nouvelles clés d'index entrantes (503) vers ladite nouvelle file d'attente.

6. Produit de programme informatique pour gérer les conflits de verrouillage d'un index de type arborescent, le produit de programme informatique comprenant : un support de mémorisation lisible par ordinateur, lisible par un circuit de traitement et mémorisant des instructions en vue d'une exécution par le circuit de traitement pour mettre en œuvre un procédé selon une quelconque des revendications 1 à 5.

7. Système de gestion des conflits de verrouillage d'un index de type arborescent, comprenant :
une mémoire pour mémoriser un programme informatique pour gérer les conflits de verrouillage d'un index ; et
un processeur connecté à ladite mémoire, dans lequel ledit processeur est configuré pour exécuter des instructions du programme informatique comprenant :
la surveillance (401) d'un conflit de verrouillage d'une page de feuille (502) dudit index pendant une opération d'insertion de clés d'index ;
le routage (403) d'une première clé d'index (503) vers une file d'attente (507) d'une mémoire tampon (506) en réponse à la détection dudit conflit de verrouillage de ladite page de feuille de l'index, dans lequel ladite première clé d'index correspond à une première clé d'index d'une transaction (501) à insérer dans ladite page de feuille dudit index ;
le routage d'une deuxième clé d'index, suivant ladite première clé d'index, vers ladite file d'attente de ladite mémoire tampon, dans lequel les clés d'index stockées dans ladite file d'attente de ladite mémoire tampon sont maintenues cohérentes par une opération de comparaison-et-échange, et
le stockage (404), dans une structure de données (604), d'une mise en correspondance de ladite première clé d'index stockée dans ladite file d'attente de ladite mémoire tampon avec ladite page de feuille subissant ledit conflit de verrouillage, dans lequel ladite structure de données stocke une mise en correspondance des clés d'index stockées dans des files d'attente de ladite mémoire tampon avec des pages de feuilles dudit index, dans lequel ladite structure de données (604) comprend un identifiant d'un emplacement de stockage de ladite première clé d'index dans ladite file d'attente de ladite mémoire tampon ainsi qu'un identifiant de ladite page de feuille (502) subissant ledit conflit de verrouillage, dans lequel les identifiants des emplacements de stockage des clés d'index dans ladite structure de données sont maintenus cohérents par une opération de comparaison-et-échange.

8. Système selon la revendication 7, dans lequel ledit conflit de verrouillage est détectée sur la base de la longueur d'une file d'attente de verrouillage au niveau de la page ou de la ligne ou sur la base d'une longueur d'une file d'attente de verrouillage.

9. Système selon la revendication 7 ou 8, dans lequel les instructions de programme du programme informatique comprennent en outre :
la surveillance d'un niveau de conflit de verrouillage au niveau d'une page de feuille, sur la base d'un nombre de transactions tentant de stocker une clé d'index dans la page de feuille et sur la base d'informations relatives à l'espace libre de la page ;
la suppression de clés d'index de ladite mémoire tampon à être insérés de manière asynchrone dans une page de feuille sur la base de ladite structure de données, en réponse à la détection d'un niveau de conflit de verrouillage de ladite page de feuille inférieure à un niveau seuil ; et
l'insertion de manière asynchrone les clés d'index supprimées dans ladite page de feuille.

10. Système selon une quelconque des revendications 7 à 9, dans lequel les instructions de programme du programme informatique comprennent en outre :
la suppression de clés d'index de ladite mémoire tampon à insérer de manière synchrone dans une page de feuille sur la base de ladite structure de données, en réponse à la détection l'un des évènements suivants choisis dans le groupe comprenant : une scission de ladite page de feuille, un déclenchement d'un point de contrôle de système pour ladite page de feuille et une instruction de sélection, de mise à jour ou d'effacement impliquant ladite page de feuille ; et
l'insertion de manière synchrone les clés d'index supprimées dans ladite page de feuille.

11. Programme d'ordinateur mémorisé sur un support lisible par ordinateur et chargeable dans la mémoire interne d'un ordinateur numérique, comprenant des parties de code logiciel pour, lorsque ledit programme est exécuté sur un ordinateur, mettre en œuvre le procédé selon une quelconque des revendications 1 à 5.
